# EUROPEAN PATENT SPECIFICATION

(11) **EP 0 906 739 B1**
(45) Date of publication and mention of the grant of the patent: **14.04.1999**
(21) Application number: 97830539.9
(22) Date of filing: 23.10.1997
(51) Int. Cl.: A47J 27/00, A47J 36/20

(54) **Kitchen utensil for cooking food**
Küchengerät zum Garen von Speisen
Ustensile ménager de cuisson d'aliments

(43) Date of publication of application: 07.04.1999
(73) Proprietor: SILGA S.p.A., 20090 Buccinasco (Milano) (IT)
(72) Inventor: Garavaglia, Fulvio Luigi, 20144 Milano (IT)
(74) Representative: Sutto, Luca

(56) References cited:
- EP-A- 0 326 105
- CH-A- 207 062
- DE-A- 3 422 011
- DE-C- 359 687
- FR-A- 585 697
- US-A- 1 664 564
- US-A- 2 907 467
- US-A- 3 808 963

## Description

The present invention relates to a kitchen utensil for cooking foods. As is well known, kitchen utensils used for cooking foods, such as pots, casseroles, pans and the like, are typically provided with a bottom wall and with a side wall emerging vertically from a perimeter edge of the bottom part. To an upper edge of the side wall can then be engaged for closure a lid able to ensure an adequate retention of heat during the cooking phase and to prevent unwanted spillage of water, oil or of other substances undergoing cooking.

In the past few years, the use has also become widespread of utensils for cooking foods to whose containment body could be engaged, with various latching systems, reticular baskets set to house foods to be subjected for instance to steam cooking or to cooking by means of frying. In this way, once the desired cooking stage was reached, the baskets of the type briefly described above could be disengaged from the containment body of the pot allowing the effective dripping of the foods as well as their easy removal from the pot.

The reticular containers described above, however, have been proven not to be very versatile, as they essentially can be used exclusively for frying or cooking the treated foods by immersion. Moreover, the bulkiness of such baskets, and the difficulty in washing them (due to their reticular structure) enormously reduce the practicality in their use.

Together with the products described, utensils for cooking foods have been subsequently realised comprising a disc-shaped element and a deflector body, having smaller radial dimensions than those of the disc-shaped element itself, and engaged thereto by means of a vertical stem fastened in correspondence with a central area of the upper surface of the disc-shaped element. Under operating conditions the foods to be cooked can be housed on the upper surface of the disc-shaped element and receive heat through holes in the disc-shaped element itself which is positioned over a conventional pot. Such holes also allow the passage of steam or oil droplets (depending on the desired cooking method) thus boiling or frying the treated substances. The deflector element operating above the disc-shaped body allows to retain part of the heat coming from the pot and also to provide a certain protection as well as a seat wherein a grip for moving the disc-shaped element can be positioned.

The device described above, while it is certainly an improvement both in terms of practicality of use and in terms of operational versatility, nevertheless also presents important drawbacks.

In the first place, the deflector body located above the surface of the disc-shaped element is not able to guarantee an effective seal both for heat and for any splashes or splatters of water/oil or similar liquid substances which, in case of high temperatures, can be forcefully ejected outward.

In addition to this, it should also be noted that the presence of the deflector element and of the related support stem entails a large vertical size which precludes the possibility of associating at the top of the disc-shaped element a conventional closure lid. This is obviously inconvenient not only when using the kitchen utensil, but also in trying to stow this utensil rationally in cabinets since the disc-shaped element has be disengaged from the containment body of the pot or of the casserole.

It is also known from document CH-A-207062 a soucepan composed of a main body, an auxiliary body and a lid. The auxiliary body is interposed between the upper edge of the main body and the lid, so as to define two chambers inside the pan. The two chambers are in communication one another by means of a series of lateral holes. Each body also presents grip means operating in radially external position with respect to the first and second chamber.

It is also known from document US-A-1664564 a cooking vessel comprising a containment body and a laminar body with a perimeter edge destined to be set in correspondence with the upper edge of the containment body. The vessel also comprises coupling means to fasten or unfasten the laminar body to the containment body. The coupling means is made of an elastic tongue having a portion fastened to the perimeter edge of the containment body so as to define a snap coupling.

In this situation, the fundamental object of the present invention is essentially to solve all the drawbacks typical of the products described above. In particular, a basic goal of the the invention is to make available a kitchen utensil for cooking foods which marries improved characteristics of practicality, extreme rationality in terms of size, excellent characteristics in terms of cooking the elements and high operating safety.

These and other objects which shall appear more clearly in the course of the description that follows are reached by a kitchen utensil for cooking foods according to the enclosed claims.

Additional characteristics and advantages shall be made more evident in the description that follows of a preferred embodiment, shown purely by way of non limiting example in the enclosed drawings, in which:
- Figure 1 is a schematic and interrupted cross section of a kitchen utensil according to the present invention;
- Figures 2 and 3 show, in enlarged view, details of the section as per Figure 1; and
- Figure 4 is a top perspective view of a plate-shaped body which is part of the kitchen utensil as per Figure 1.

With reference to the enclosed figures, the number 1 indicates in its entirety a kitchen utensil for cooking foods according to the present invention.

The subject kitchen utensil conventionally comprises a containment body 2 presenting a bottom wall 3, for instance circular, oval or polygonal, and a side wall 4 emerging from the perimeter of the bottom wall. In correspondence with an upper edge 5 of the side wall 4 can be associated in closure a lid 6 presenting, in central position and in correspondence with its outer surface, a grip element or knob 7.

In greater detail, the upper edge 5 of the side wall 4 is normally folded outward to receive a corresponding perimeter portion 8 of the lid 6. Originally, the kitchen utensil also comprises a laminar body 9 operatively interposed between the upper edge 5 of the side wall 4 of the containment body 2 and the lid 6 to define at least a first chamber 10, developing between the lower surface 9a of the laminar body itself and the containment body 2, and at least a second chamber 11, developing between the upper surface 9b of the laminar body 9 and the closure lid 6.

More precisely, the first chamber 10 is delimited at the bottom by the bottom wall 3, radially by the side wall 4 and at the top by the laminar body 9.

In turn, the second chamber 11 is delimited at the bottom by the laminar body 9 and at the top by the closure lid 6.

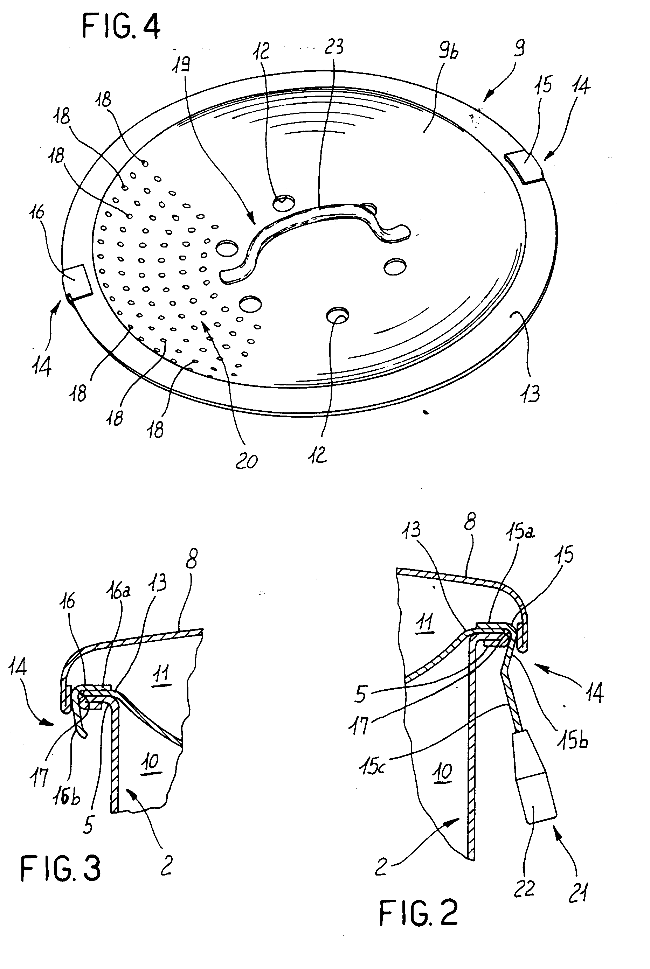

The laminar body 9 advantageously presents at least a first series of through holes 12 (see Figure 4) set to place in fluid communication the first chamber with the second chamber. In practice the through holes 12 of the first series extend vertically and allow heat, steam, droplets of oil or of other substances, able to vapourise or to atomise at high temperature, to move from the first to the second chamber.

As Figures 2 and 3 show in detail, the laminar body 9 is shaped according to the bottom wall of the utensil and thus it may present a circular, elliptical or polygonal conformation according to requirements. Such laminar body is defined by a thin sheet, suitably shaped and holed and obtained for instance by pressing metallic materials such as steel, aluminium and the like. This obviously does not exclude that the laminar body could be obtained from other materials suitable to be used in contact with foods and to operate at high temperatures.

The laminar body 9 is also fitted with a perimeter edge 13 destined to be set in correspondence with the upper edge 5 of the side wall. The perimeter edge 13 of the laminar body defines at its top an annular seat wherein the corresponding perimeter portion 8 of the closure lid is to be housed. More precisely the edge 13 of the laminar body comprises a continuous folded lip extending along the whole upper edge 5 of the containment body 2.

Such laminar body is also fitted with means 14 for removable coupling associated to the perimeter edge 13 to allow to position the laminar body itself selectively in an engaged condition, wherein the perimeter edge 13 of the laminar body 9 is fastened to the upper edge 5 of the containment body 2, so that the containment body and the laminar body are integral, and a disengaged condition, wherein the perimeter edge 13 of the laminar body 9 is unfastened from the upper edge 5 of the containment body 2 so that the laminar body can be removed from the containment body itself to perform the various functions which, as shall be better explained hereafter, the laminar body can carry out.

It should be noted that the coupling means 14 comprise at least a first and a second tongue 15, 16, having each a first portion 15a, 16a fastened to the perimeter edge 13 of the laminar body 9 and a second portion 15b, 16b folded downward with respect to said first portion 15a, 16a to define a seat 17 wherein to house the upper edge 5 of the containment body 2.

It should be noted that to allow a firm interference coupling between the laminar body 9 and the containment body 2 at least one of said first or second tongue 15, 16 is made of elastic material able to deform as a result of the coupling of the laminar body 9 with the upper edge 5 of the containment body 2.

In greater detail, the first tongue 15 preferably presents the second portion 15b directed radially towards the interior of the containment body and a third portion 15c, consecutive to the second portion, folded in radially outward direction with respect thereto to define a snap coupling of the laminar body 9 with the upper edge 5 of the containment body.

The second and the third portion 15b and 15c of the first tongue 15 must be made of elastic material to define said snap coupling.

It should be noted that, alternatively to what has been described above, more than two tongues can be provided according to the requirements and in particular to the size of the kitchen utensil under consideration. Also in terms of width each tongue may be suitably dimensioned according to the various operational requirements encountered.

The laminar body is fitted with grip means 21 operating in a radially external position with respect to said first and to said second chamber 10 and 11. More precisely, the grip means 21 radially protrude from the second chamber 11 also with the lid 6 in its engaged position and are preferably defined by a knob 22 terminally fastened to the third portion 15c of the first tongue.

It should be noted that the grip means can comprise two of said knobs 22 emerging in radial direction externally with respect to said chambers and fastened to the laminar body 9. The grip knobs can preferably be set in diametrically opposite positions to enable easily to handle the laminar body.

It should be noted that the laminar comprises also a second series of through holes 18 also set to place in fluid communication the first chamber with the second chamber 11.

The holes 12 of the first series present a passage area noticeably greater than the passage area of the holes 18 of the second series.

The reason for this shall be made clearer hereafter in the discussion of the operating employment of the subject kitchen utensil. In terms of the disposition of the holes, it should be specified that the holes 12 of the first series are positioned preferably at equal intervals from each other in correspondence with a central area 19 of the laminar body 9.

Differently, the holes 18 of the second series are distributed along a perimeter band 20 of pre-set angular extension defined between the central area 19 and the perimeter edge 13 of the laminar body 9.

It should also be noted that the holes 18 of the second series are in much greater number, for instance several tens of holes, whereas the holes 12 of the first series are in very limited number, for instance 4-10 holes.

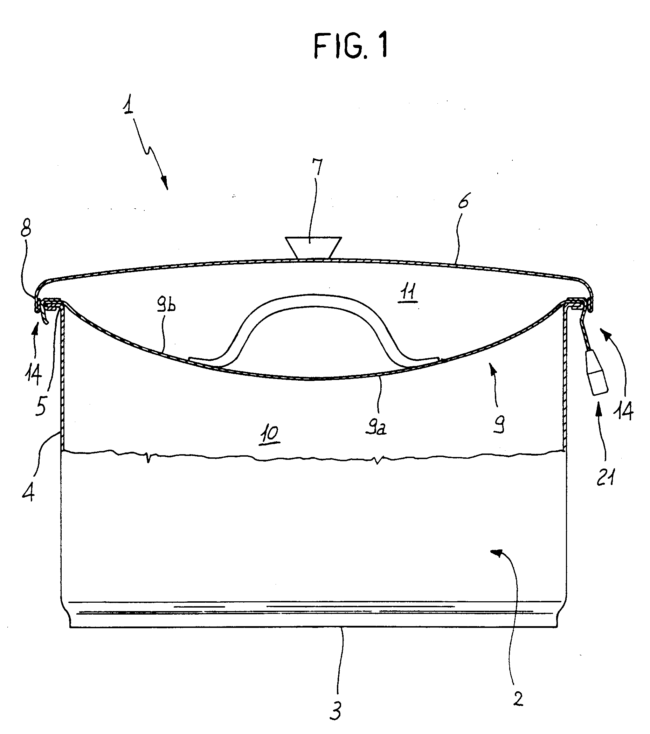

Advantageously the laminar body 9 is of concave shape with its concavity facing the closure lid 6, obviously with reference to the condition of engagement of the laminar body to the containment body, i.e. in operative conditions (see Figure 1).

Thanks to the concave shape, the volume of the second chamber 11 is maximised. Advantageously the laminar body presents its concavity shaped and dimensioned in such a way as to define, with lid 6, a second chamber of suitable volume and, more precisely, of a volume that is greater than or equal to the ideal volume which the second chamber would present if the laminar body had a plane conformation. At the same time the concavity of the laminar body must not be too accentuated in order to be sufficiently distanced from the bottom without requiring the use of containment bodies 2 having a high side wall 4, thus also allowing for steam cooking or frying without immersion of the food housed in the second chamber.

Laminar body 9 can also be provided with an auxiliary grip element 23 fastened to the upper surface 9b of the laminar body itself and comprising for instance a handle or a knob or yet another element which, under operative conditions, is entirely housed in the second chamber 11. After the prevalently structural description above, the operation and the operating modes of the kitchen utensil according to the present invention shall be analysed specifically hereafter.

In the first place, it should be noted that by engaging the laminar body 9 to the upper edge 5 of the containment body 2 it is possible to position a certain quantity of foods in correspondence with the upper surface of the laminar body itself. In this way, it is possible for instance to steam cook foods, by inserting a suitable quantity of water in the first chamber 10 and positioning the containment body 2 over a heat source.

This type of cooking can be performed with the maximum efficiency in terms of heat exploitation by positioning the lid 6 over the laminar body 9, in order to define the second chamber 11, essentially insulating the products placed on the laminar body 9 from the outside environment.

It should be noted that heat and steam, passing through the holes 12, 18 obtained in the laminar body can perform an effective heating action on the products undergoing cooking.

Note that also when cooking is to be accomplished by frying it is possible to position the foods on the laminar body 9, so that they are not immersed in the oil contained inside the first chamber 10. In this case, once the oil reaches a high temperature, the foods are cooked both thanks to the heat and thanks to the oil droplets which at high temperature tend to free themselves from the liquid phase present in the first chamber and in part go through the first series of holes and perform an effective surface frying action on the foods placed on the laminar body.

In this case as well the action performed by the lid is very effective, since it effects the essential closure of the second chamber preventing steam and oil droplets at high temperature from exiting.

In practice, thanks to the structure described above, an extremely effective and efficient cooking of foods is obtained in terms of heat exploitation; moreover, particularly with reference to frying, a minimal quantity of oil is actually absorbed by the foods, which thus are healthy without thereby losing any of their organoleptic properties. The possibility of associating the lid over the laminar body is effective also in terms of protection and thus of safety because any unwanted and violent escape of steam or oil at high temperature is essentially prevented.

Once cooking is completed and when the need thus arises to stow the kitchen utensil in appropriate cabinets, on shelves, or in containment compartments, it is noted that such utensil presents exactly the same bulk as any normal pot or casserole since the laminar body, even when fitted with auxiliary grip elements, is completely housed between the closure lid and the containment body.

Note also that, thanks to the presence of grip means emergening externally from said first and from said second chamber and integral with the laminar body, it is possible to disengage the latter from the containment body and to handle it without removing the closure lid in such a way that the foods contained in the second chamber are able, insofar as possible, to maintain their temperature until the time they are to be consumed.

The subject kitchen utensil is also extremely versatile since it can be advantageously used for cooking foods such as pasta and the like which can be housed and cooked within the first chamber 10 and then, when completely cooked, be subjected to an effective action of removal and drainage of the water which can be made to flow out from the second series of holes 18 simply by tilting the utensil with the laminar body in the engaged condition.

The invention attains important advantages.

As made clear by the description above, the kitchen utensil according to the present invention is extremely effective in cooking foods minimising heat dispersion and allowing to cook foods in a healthy manner without thereby reducing their organoleptic properties.

To this end, of particular importance is the fact that the second chamber is essentially closed by the lid which allows only minimal steam and heat evacuations in correspondence with the perimeter edge of the containment body.

Also advantageous is the fact the the laminar element has a concave shape in order to maximise the volume of the second chamber. Note also that the provision of grip means positioned laterally and externally to the second chamber allows easily to handle the laminar body both by itself and in its engaged condition with the lid. Also advantageous is the provision of the auxiliary grip means which can constitute an additional element to handle the laminar body or anyway a convenient engagement area for attaching the laminar body to a wall without thereby precluding the possibility of housing in any case the laminar body itself between lid and containment body in order to minimise the space required for stowing the entire kitchen utensil in appropriate cabinets.

## Claims

1. Kitchen utensil for cooking foods comprising:
- a containment body (2) presenting a bottom wall (3) and a side wall (4) emerging from the perimeter of said bottom wall,
- a lid (6) which can be associated in closure to an upper edge (5) of said side wall (4),
- a laminar body (9) operatively interposed between the upper edge (5) of the containment body (2) and the lid (6) to define at least a first chamber (10), developing between a lower surface (9a) of the laminar body (9) itself and the containment body (2), and at least a second chamber (11), developing between an upper surface (9b) of the laminar body (9) and the closure lid (6), said laminar body (9) presenting at least a first series of through holes (12) set to place in fluid communication the first chamber (10) with the second chamber (11),
characterised in that the laminar body (9) comprises a second series of through holes (18) also set to place in fluid communication said first chamber (10) with said second chamber (11), the holes (12) of the first series presenting a greater passage area than those of the holes (18) of said second series, said holes (12) of the first series being set in correspondence with a central area (19) of the laminar body (9), said holes (18) of the second series being distributed along a perimeter band (20) of pre-set angular extension defined between said central area (19) and the perimeter edge (13) of the laminar body (9).

2. Kitchen utensil according to claim 1, characterised in that the laminar body (9) presents a perimeter edge (13) destined to be set in correspondence with the upper edge (5) of said side wall (4) and removable coupling means (14) associated to the perimeter edge to allow to position the laminar body (9) respectively in an engaged position, wherein the perimeter edge (13) of the laminar body (9) is fastened to the upper edge (5) of the containment body (2), and in a disengaged condition, wherein the perimeter edge (13) of the laminar body (9) is unfastened from the upper edge (5) of the containment body (2).

3. Kitchen utensil according to claim 2, characterised in that the coupling means (14) comprise at least a first and a second tongue (15, 16) having each a first portion (15a, 16a) fastened to the perimeter edge (13) of the laminar body (9) and a second portion (15b, 16b) folded downward with respect to said first portion to define a seat (17) wherein to house the upper edge (5) of the containment body (2).

4. Kitchen utensil according to claim 3, characterised in that at least one of said first or second tongue (15, 16) is made of elastic material.

5. Kitchen utensil according to claim 3, characterised in that at least said first tongue (15) presents the second portion (15b) folded in the direction of said containment body (2) and a third portion (15c), consecutive to the second portion, folded in a radially external direction with respect thereto to define a snap coupling of the laminar body (9) with the upper edge (5) of the containment body (2).

6. Kitchen utensil according to claim 1, characterised in that the laminar body (9) is of concave shape with its concavity facing the closure lid (6).

7. Kitchen utensil according to claim 1, characterised in that it comprises grip means (21) engaged to the laminar body (9) and operating in a radially external position with respect to said first and to said second chamber (10, 11).

8. Kitchen utensil according to claim 6, characterised in that it comprises an auxiliary grip element (23) fastened to the upper surface (9b) of the laminar body (9), said auxiliary grip element being entirely contained in said second chamber (11).

## Patentansprüche

1. Küchengerät zum Kochen von Nahrungsmitteln, umfassend:
- ein Aufnahmegehäuse (2), das eine Bodenwand (3) und eine vom Umfang der Bodenwand emporsteigende Seitenwand (4) aufweist;
- einen Deckel (6), der beim Schließen einem oberen Rand (5) der Seitenwand (4) zuzuordnen ist,
- einen lamellenförmigen Körper (9), der wirksam zwischen dem oberen Rand (5) des Aufnahmegehäuses (2) und dem Deckel (6) liegt, um mindestens eine erste Kammer (10), die sich zwischen einer unteren Fläche (9a) des lamellenförmigen Körpers (9) selbst und dem Aufnahmegehäuse (2) abwickelt, und mindestens eine zweite Kammer (11) festzulegen, die sich zwischen einer oberen Fläche (9b) des lamellenförmigen Körpers (9) und des Deckels (6) abwickelt, wobei der lamellenförmige Körper (9) mindestens eine erste Reihe von durchgehenden Löchern (12) aufweist, die die erste Kammer (10) mit der zweiten Kammer (11) in Fließverbindung bringt,
dadurch gekennzeichnet, daß der lamellenförmige Körper (9) eine zweite Reihe von durchgehenden Löchern (18) umfaßt, die auch sie die erste Kammer (10) mit der zweiten Kammer (11) in Fließverbindung setzt, wobei die Löcher (12) der ersten Reihe eine Durchgangsfläche aufweist, die größer ist als jene der Löcher (18) der zweiten Reihe, wobei die Löcher (12) der ersten Reihe im Bereich einer mittigen Fläche (19) des lamellenförmigen Körpers (9) angeordnet sind, wobei die Löcher (18) der zweiten Reihe längs eines umlaufenden Streifens (20) vorgegebener Winkelausdehnung verteilt sind, die zwischen dem mittigen Bereich (19) und dem umlaufenden Rand (13) des lamellenförmigen Körpers (9) festgelegt ist.

2. Küchengerät nach Anspruch 1, dadurch gekennzeichnet, daß der lamellenförmige Körper (9) einen umlaufenden Rand (13) umfaßt, der dazu bestimmt ist, im Bereich des oberen Randes (5) der Seitenwand (4) angeordnet zu werden, und abnehmbare Koppelmittel (14) aufweist, die dem umlaufenden Rand zugeordnet sind, um die Positionierung des lamellenförmigen Körpers (9) wahlweise in einer Eingriffsstellung, in der der umlaufende Rand (13) des lamellenförmigen Körpers (9) an den oberen Rand (5) des Aufnahmegehäuses (2) gebunden ist, und in einer Freigabestellung zu erlauben, in der der umlaufende Rand (13) des lamellenförmigen Körpers (9) vom oberen Rand (5) des Aufnahmekörpers (2) befreit ist.

3. Küchengerät nach Anspruch 2, dadurch gekennzeichnet, daß die Koppelmittel (14) mindestens eine erste und eine zweite Lasche (15, 16) umfassen, die jeweils einen ersten am umlaufenden Rand (13) des lamellenförmigen Körpers (9) befestigten Abschnitt (15a, 16a) und einen zweiten Abschnitt (15b, 16b) aufweisen, der unten gegenüber dem ersten Abschnitt umgebogen ist, um eine Aufnahme (17) festzulegen, wo der obere Rand (5) des Aufnahmegehäuses (2) aufgenommen wird.

4. Küchengerät nach Anspruch 3, dadurch gekennzeichnet, daß mindestens eine der ersten oder der zweiten Laschen (15, 16) aus einem Federmaterial besteht.

5. Küchengerät nach Anspruch 3, dadurch gekennzeichnet, daß mindestens die erste Lasche (15) einen zweiten Abschnitt (15b), der in Richtung des Aufnahmegehäuses (2) umgebogen ist, und einen dritten Abschnitt (15c) aufweist, der an den zweiten Abschnitt anschließt, und gegenüber diesem letzteren in radial äußeren Richtung umgebogen ist, um eine Schnappverbindung des lamellenförmigen Körpers (9) mit dem oberen Rand (5) des Aufnahmegehäuses (2) festzulegen.

6. Küchengerät nach Anspruch 1, dadurch gekennzeichnet, daß der lamellenförmige Körper (9) konkaver Ausbildung ist, mit in Richtung des Deckels (6) gerichteten Konkavität.

7. Küchengerät nach Anspruch 1, dadurch gekennzeichnet, daß es Greifmittel (21) umfaßt, die am lamellenförmigen Körper (9) angreifen und in einer gegenüber der ersten und der zweiten Kammer (10, 11) radial äußeren Stellung wirken.

8. Küchengerät nach Anspruch 6, dadurch gekennzeichnet, daß es ein Hilfsgreifelement (23) umfaßt, das an der oberen Fläche (9b) des lamellenförmigen Körpers (9) befestigt ist, wobei das Hilfsgreifelement in dieser zweiten Kammer (11) vollständig aufgenommen ist.

## Revendications

1. Ustensile ménager de cuisson d'aliments comprenant:
- un corps formant conteneur (2) présentant une paroi de fond (3) et une paroi latérale (4) émergeant du périmètre de ladite paroi de fond,
- un couvercle (6) qui peut être associé, lors de la fermeture, à un bord supérieur (5) de ladite paroi latérale (4),
- un corps laminaire (9) interposé opérationnellement entre le bord supérieur (5) du corps formant conteneur (2) et le couvercle (6), en vue de définir au moins une première chambre (10) s'étendant entre une surface inférieure (9a) du corps laminaire (9) lui-même et le corps formant conteneur (2), et au moins une deuxième chambre (11) se développant entre une surface supérieure (9b) du corps laminaire (9) et le couvercle de fermeture (6), ledit corps laminaire (9) présentant au moins une première série de trous de passage (12) agencés de manière à mettre en communication de fluide la première chambre (10) avec la deuxième chambre (11),
caractérisé en ce que le corps laminaire (9) comporte une deuxième série de trous de passage (18) également agencés de manière à mettre en communication de fluide ladite première chambre (10) avec ladite deuxième chambre (11), les trous (12) de la première série présentant une aire de passage plus large que celle des trous (18) de ladite deuxième série, lesdits trous (12) de la première série étant mis en correspondance d'une aire centrale (19) du corps laminaire (9), lesdits trous (18) de la deuxième série étant distribués le long d'une bande périmétrique (20) d'extension angulaire prédéterminée définie entre ladite aire centrale (19) et le bord périmétrique (13) du corps laminaire (9).

2. Ustensile ménager selon la revendication 1, caractérisé en ce que le corps laminaire (9) présente un bord périmétrique (13) destiné à être disposé en correspondance du bord supérieur (5) de ladite paroi latérale (4) et des moyens d'accouplement amovible (14) associés au bord périmétrique pour permettre la mise en place du corps laminaire (9) respectivement dans une position d'engagement, à laquelle le bord périmétrique (13) du corps laminaire (9) est fixé au bord supérieur (5) du corps formant conteneur (2), et dans une position de dégagement, à laquelle le bord périmétrique (13) du corps laminaire (9) est détaché du bord supérieur (5) du corps formant conteneur (2).

3. Ustensile ménager selon la revendication 2, caractérisé en ce que les moyens d'accouplement (14) comportent au moins une première et une deuxième languettes (15, 16) ayant chacune une première portion (15a, 16a) fixée au bord périmétrique (13) du corps laminaire (9) et une deuxième portion (15b, 16b) repliée vers le bas par rapport à ladite première portion, en vue de définir un siège (17) pour le logement du bord supérieur (5) du corps formant conteneur (2).

4. Ustensile ménager selon la revendication 3, caractérisé en ce que l'une au moins desdites première et deuxième languettes (15, 16) est en matière élastique.

5. Ustensile ménager selon la revendication 3, caractérisé en ce qu'au moins ladite première languette (15) présente sa deuxième portion (15b) repliée dans la direction dudit corps formant conteneur (2) et une troisième portion (15c), consécutive à la deuxième portion, repliée dans une direction extérieure en sens radial par rapport à la deuxième portion, en vue de définir un accouplement par emboîtement à force du corps laminaire (9) avec le bord supérieur (5) du corps formant conteneur (2).

6. Ustensile ménager selon la revendication 1, caractérisé en ce que le corps laminaire (9) est de forme concave, sa concavité étant tournée vers le couvercle de fermeture (6).

7. Ustensile ménager selon la revendication 1, caractérisé en ce qu'il comporte des moyens de préhension (21) engagés au corps laminaire (9) et agissant dans une position extérieure en sens radial par rapport auxdites première et deuxième chambres (10, 11).

8. Ustensile ménager selon la revendication 6, caractérisé en ce qu'il comporte un élément auxiliaire de préhension (23) fixé à la surface supérieure (9b) du corps laminaire (9), ledit élément auxiliaire de préhension étant entièrement contenu dans ladite deuxième chambre (11).
